# EUROPEAN PATENT APPLICATION

(11) **EP 1 113 696 A2**
(43) Date of publication of application: **04.07.2001**
(21) Application number: 00128426.4
(22) Date of filing: 28.12.2000
(51) Int. Cl.: H04Q 11/04

(54) **ATM over DSL service**

(30) Priority: 28.12.1999 US 474001
(71) Applicant: Alcatel USA Sourcing, L.P., Plano, TX 75075 (US)
(72) Inventor: Shamseldin, Adel A., Dr., Rohnert Park, California 94928 (US); Joerger, Richard B., Rohnert Park, California 94928 (US); Neel, Thomas H., Petaluma, California 94954 (US); Midani, Mowaffak T., Petaluma, California 94954 (US); Mendelson, Jeffrey B., Petaluma, California 94954 (US); Franceschini, Paul, Petaluma, California 94952 (US); Bahgat, Osama, Petaluma, California 94952 (US); Auld, Lynton, Rohnert Park, California 94952 (US)
(74) Representative: Dreiss, Fuhlendorf, Steimle & Becker

(57) **Abstract**

A network node includes a TDM-ATM gateway that performs loop functions on behalf of one or more narrowband derived lines. The gateway is incorporated into the same equipment that performs routing of network traffic. The routing can involve switching or multiplexing or both, and it can consist of ATM cell routing or TDM traffic routing or both. In an embodiment, the gateway is incorporated into an integrated DLC/DSLAM access node. A single Element Management System may be used to manage the integrated DLC/DSLAM/Gateway equipment.

## Description

### BACKGROUND

### 1. Field of the Invention

The invention is related to the field of telecommunications, and more particularly to a technique for providing loop emulation services or voice over packet or cell transports such as ATM-over-DSL service.

### 2. References

The following documents are all incorporated herein by reference in their entirety:
Nattkemper et. al., "Distributed Telecommunications Switching System and Method," U.S. Patent No. 5,953,318
Stevenson, "Method and Apparatus for Placing Time Division Multiplexed Telephony Traffic into an Asynchronous Transfer Mode Format," U.S. Patent No. 5,889,773
ATM Forum, "ATM User-Network Interface Specification Version 3.1," (September, 1994) ("UNI 3.1")
ATM Forum, "ATM User-Network Interface (UNI) Signaling Specification Version 4.0," (July 1996) ("UNI 4.0")
ATM Forum, "Utopia Level 2, Version 1.0, af-phy-0039.000" (June 1995) ("Utopia Specification")
International Telecommunication Union (ITU), "Broadband Integrated Services Digital Network (B-ISDN) - Digital Subscribers Signaling System No. 2 (DSS 2) - User-Network Interface (UNI) Layer 3 Specification for Basic Call/Connection Control," ITU-T recommendation Q.2931 (February 1995) ("Q.2931")
ITU, "ISDN User-network Interface Layer 3 Specification for Basic Call Control," Recommendation Q.931 (05/98) ("Q.931")
ITU, "B-ISDN ATM Adaptation Layer specification: Type 2 AAL," ITU-T Recommendation I.363.2 (1997) (I.363.2)
ITU, "Segmentation and Reassembly Service Specific Convergence Sublayer for the AAL type 2," ITU-T Recommendation 1.366.1 (1998) (1.366.1)
ITU, "AAL Type 2 Service Specific Convergence Sublayer for Trunking", ITU-T Recommendation 1.366.2, 02/99
ITU, "Packet-based multimedia communications systems," ITU-T Recommendation H.323 (02/98)
ITU, "Packet-based multimedia communications systems Annex D: Real-time facsimile over H.323 systems," Annex D to ITU-T Recommendation H.323 (09/98)
ATM Forum, "ATM Trunking Using AAL2 for Narrowband Services," AF-VTOA-0113.000 (2/99) (the "VTOA" specification)
ADSL Forum, "Recommended Interoperability Implementation Agreement for BLES", CopperCom and Alcatel, 99-204, August, 1999.
ATM Forum, "Loop emulation service and new profile definition for voice over AAL2", Alcatel USA, 99-0392, July, 1999 (the "99-0392 profile")
ATM Forum, "LAN Emulation Over ATM Version 1.0," (January 1995); ATM Forum, "LAN Emulation Client Management Specification Version 1.0" (September 1995); ATM Forum, "LAN Emulation Over ATM Version 1.0 Addendum" (December, 1995); and ATM Forum, "LAN Emulation Servers Management Specification 1.0" (March 1996) (LANE-4) (All collectively referred to herein as LANE specification)
Telecordia, GR-303-CORE Issue 2, "IDLC Generic Requirements, Objectives, and Interface", December 1998 and the associated Issues List Report: GR-303-ILR Issue 2A, December 1998;
Telecordia, GR-303-IMD, IDLC System Generic Operations Interface (formerly TR-TSY-000303 Supplement 3), Issue 1, December 1998; Telecordia, GR-2833-CORE Issue 3, Revision 2, "Generic Operations Interfaces Using OSI Tools: Information Model for IDLC and FITL Systems", and the associated Issues List Report: GR-2833-ILR Issue 3C, December 1998; and Telecordia, GR-2905-CORE, Issue 2, October 1997, Revision 1, "Generic Requirements for EML Applications for Management of IDLC Systems", and the associated Issues List Report: GR-2905-ILR Issue 2B, December 1998 (All referred to herein collectively as GR-303 Specification)
Telecordia, "Digital Interface Between the SLC-96(r) Digital Loop Carrier System and a Local Digital Switch," Document No. TR-TSY-000008 Issue 2, Aug 1987 (TR-08 Specification)

### 3. Description of Related Art

In the public switched telephone network (PSTN), narrowband (NB) traffic is carried over time domain multiplexed (TDM) links. The PSTN utilizes cross-connect switching systems at telephone company facilities, and digital loop carriers (DLCs) to provide analog or TDM subscriber drops to individual customers. Narrowband services are defined herein to include all TDM services up to a T1 data rate, as well as analog telephony. They include plain old telephone service (POTS), integrated services digital network (ISDN), and T1 services, among others.

The Asynchronous Transfer Mode (ATM) network is a network of digital switches which carry and route traffic which has been packaged into individual "ATM cells". ATM is defined in a number of specifications published by the ATM Forum, including UNI 3.1 and UNI 4.0. The term "ATM," as used herein, refers to a network protocol that conforms to these documents in all relevant respects, whether or not it also conforms to more recent or other specifications as well. In an ATM network, each cell contains addressing information which enables the ATM switches to route incoming cells to the next node toward their proper destination. Digital Subscriber Line Access Multiplexers (DSLAMs) are used to provide individual subscriber connections to the ATM network. ATM services are usually used to provide broadband (BB) services to individual customers. In the access loop, ATM is typically carried over an ADSL physical layer on a twisted copper pair.

Recently, there has been interest in providing narrowband loop emulation services, or voice, over an ATM interface. Such services can provide narrowband lines, sometimes called "derived lines," at the customer premises without requiring additional twisted pairs. "Derived line" service typically utilizes an already existing ATM over ADSL access loop infrastructure to provide additional narrowband services to the customer.

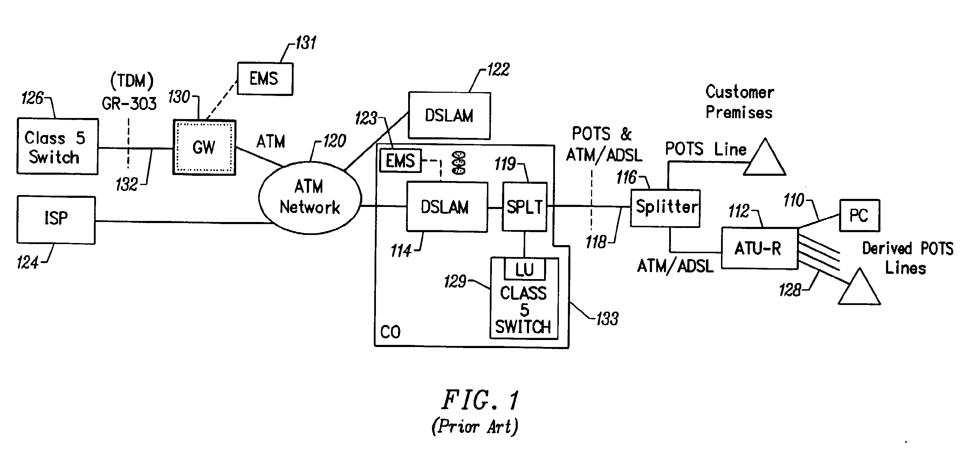

Fig. 1 is a block diagram of pertinent parts of a prior art network architecture which uses a standalone gateway to provide loop emulation services at a customer premises. At the customer premises, a data network 110 is connected to a data port of an ADSL termination unit (ATU-R) 112, also called an Integrated Access Device (IAD). The data network carries data encapsulated in packets, for example IP packets, typically over an Ethernet. In the upstream direction, the ATU-R 112 extracts the IP packets from Ethernet frames, re-encapsulates them into ATM cells and transports them over the ADSL link 118 to a digital subscriber line access multiplexer (DSLAM) 114 in a service provider's Central Office (CO) 133. The reverse process occurs in the downstream direction. As used herein, IP packets and ATM cells are both examples of "packets". Optionally, a splitter 116 can be inserted within the ATM-over-ADSL link 118 at the customer premises, and a corresponding splitter 119 at the central office 133, to allow conventional analog POTS signals to be carried over the same twisted pair 118 to the location of DSLAM 114 where they are split off and provided to a line unit of a Class 5 switch 129. DSLAM 114 carries the IP-over-ATM traffic onto the ATM network 120, where it can be routed to other DSLAMs 122 and/or internet service providers (ISPs) 124. Obviously, the overall architecture can also include conventional POTS service at the same customer premises, connecting to the Class 5 switch 129 via separate analog and TDM links and equipment not shown. The use of the ATM network 120 to carry IP-over-ATM data between or among two or more data networks is typically accomplished according to the local area network emulation (LANE) specifications incorporated above. In addition, whereas the implementation shown in Fig. 1 uses an ADSL (*Asymmetric* Digital Subscriber Line) link connected between the ATU-R and the DSLAM 114, other types of Digital Subscriber Line (DSL) links can be used instead. At the central office, the ADSL link 118 is terminated typically by an ADSL Terminations Unit-Central Office (ATU-C) card in the DSLAM 114.

In order to provide derived line service, the ATU-R 112 is modified to provide one or more narrowband POTS ports 128. The ATU-R 112 digitizes the POTS signals from ports 128 and encapsulates them into ATM cells, which it then merges with the IP-over-ATM cells created from the data network 110. Thus the stream of ATM cells carried over the ATM-over-ADSL link 118 includes both conventional data-carrying ATM cells as well as ATM cells carrying TDM voice traffic. ATM cells carrying TDM traffic, however, are carried within a virtual circuit (VC) that terminates at a standalone gateway 130. DSLAM 114 routes all of the ATM cells arriving from ATM-over-ADSL link 114 into the ATM network 120, which eventually routes those cells carrying TDM traffic to the gateway 130. The gateway 130 extracts the TDM information from its incoming ATM cells and converts them back to TDM format for transmission, for example over a GR-303 link 132, to a second Class 5 switch 126. In the reverse direction, TDM traffic from the switch 126 arrives at the gateway 130, where it is encapsulated into ATM cells and transmitted to the ATM network 120. The ATM network 120 routes the cells to the proper DSLAM 114, which routes them further onto the ATM-over-ADSL link 118 to an ATU-R 112. The ATU-R 112 extracts the TDM data from these ATM cells and forwards it to derived line port 128.

Since there is no direct analog connection between a derived line POTS port at the customer premises and the TDM switch 126 on the far side of the gateway 130, ordinary POTS signaling behaviors, such as on- and off-hook, will not have their desired effect. Therefore, in order to complete the loop emulation service provided by gateway 130, the ATU-R 112 detects such behaviors, encodes them into special signaling ATM cells and transmits them to the gateway. The gateway then decodes the signaling ATM cells and signals the Class 5 switch on behalf of the derived POTS line. Any downstream signaling is transported in a corresponding manner.

Typical specifications for encapsulation and extraction of both the TDM voiceband signals as well as POTS signaling information are described in the above-incorporated VTOA specification and ITU-T Recommendations I.363.2 and I.366.2. ATM cells conforming to these specifications in all relevant respects, whether or not they also conform to other specifications as well, are referred to herein as AAL Type 2 ATM cells or merely AAL-2 or AAL2 cells. As used herein, "user traffic" refers to traffic carrying content (voice, data, etc.) to or from users, whereas "signaling or management traffic" refers to traffic carrying signaling content and other content for operating the communications network.

The gateway 130 is a standalone unit, residing behind the ATM network in a separate central office, and supporting multiple DSLAMs. In other configurations the gateway 130 can reside behind only one DSLAM and be located in the local service provider's central office 133, in which case the gateway 130 can connect to the local Class 5 switch 129 instead of requiring a separate Class 5 switch 126. In either configuration the gateway 130 is a separate unit, separate from the various ATM and PSTN switches and access multiplexers. As a standalone unit the gateway 130 needs to be managed as a separate network element, for a wide variety of purposes including fault detection, protection switching and repair, configuration and provisioning, performance monitoring, security, connectivity and accounting. This can create difficulties since standalone gateways are typically not manufactured by the same companies that manufacture other network equipment that the service provider may need to manage, and the controllers that manage such gateways therefore may not integrate well with those that manage all the other equipment in the central office. As shown in Fig. 1, therefore, the gateway 130 is managed by one element management system (EMS) 131, whereas the DSLAM 114 is managed by another, different, EMS 123. A standalone gateway also needs to be managed as a separate communications node in both the ATM and TDM networks, for establishing required interconnections for network traffic. This too can present problems because provisioning of telephony will require coordination between the gateway Class 5 switch assignments and separate derived POTS lines assignment. In addition, maintenance procedures will also need circuit traceability between multiple network elements. Test and turn-up processes to test derived POTS lines will furthermore require coordination with multiple network elements, since the standalone gateway typically has no telephony test access points. Still further, there are no currently existing element managers which support derived line network elements from multiple vendors. Thus the need to mix and match DLCs and standalone gateways will require special testing for compatibility of the management function for each element.

A standalone gateway also represents an additional point of potential failure for network reliability purposes. Moreover, as a standalone unit the gateway 130 occupies valuable central office floor space and has its own added power and cooling requirements. It requires its own separate battery backup system as well, which can be a significant added cost. Still further, because the gateway 130 is a standalone unit, it can be uneconomical to install one for only a small number of derived POTS lines.

Accordingly, while existing TDM-ATM gateways are valuable in providing derived line service and thereby greatly increasing the value to subscribers of DSL service, they do so only at great cost which may not be justified by the added revenue that a service provider might receive by providing derived line service. It would be extremely desirable to find a way to provide derived line service on DSL lines at a much reduced cost, without needing to install a standalone gateway unit.

### SUMMARY OF THE INVENTION

According to the invention, roughly described, a TDM-ATM gateway that performs loop functions on behalf of one or more narrowband derived lines is incorporated into the same equipment that performs routing of network traffic. The routing can involve switching or multiplexing or both, and it can consist of ATM cell routing or TDM traffic routing or both. In the preferred embodiment, the gateway is incorporated into equipment that routes both TDM traffic and ATM traffic, such as an Alcatel USA Litespan terminal. In this case the TDM port of the gateway is multiplexed with other TDM subscriber traffic onto a network side TDM interface and the ATM port of the gateway acts as the ATM termination point for one or more virtual circuits from one or more subscriber remote ATM termination units.

By integrating a TDM-ATM gateway with other network equipment that also performs ATM and/or TDM traffic routing, it is no longer necessary to manage the gateway as a separate network element. Instead, it can be managed as merely a component or sub-component of the routing equipment. Nor, in some embodiments, does an integrated gateway represent an additional point of potential failure, since in such embodiments the gateway is integrated onto a controller card that is already part of a protection group, and that is already the smallest replaceable component in the event of failure. Nor does an integrated gateway occupy any additional central office floor space, nor does it add significantly to the power and cooling requirements of the existing equipment. Moreover, because most of the fixed costs incurred to support an integrated gateway are already incurred due to the host network equipment, a service provider can economically choose to roll out derived line service gradually, with only a small number of lines supported initially, and/or can transition from PSTN-transported TDM service to ATM-transported TDM service also as gradually as desired.

### BRIEF DESCRIPTION OF THE DRAWINGS

The invention will be described with respect to specific embodiments thereof, and reference will be made to the drawings, in which:
Fig. 1 symbolically illustrates a conventional network architecture.
Fig. 2 is a block diagram of pertinent portions of a Litespan CBA of Fig. 5.
Figs. 3-8 illustrate portions of a Litespan System incorporating features of the invention.
Fig. 9 is a communication protocol diagram.
Figs. 10, 12 and 13 illustrate functions performed by the gateway in Fig. 2.
Fig. 11 symbolically illustrates the network architecture of Fig. 1, modified to incorporate features of the invention.
Fig. 14 symbolically illustrates messaging flow through a conventional Litespan Terminal.
Fig. 15 symbolically illustrates messaging flow through a Litespan Terminal, modified in accordance with an aspect of the invention.
Figs. 16 and 18 are ladder diagrams illustrating call origination flow using the structures of Fig. 14, for TR-08 and GR-303 connections respectively.
Figs. 17 and 19 are ladder diagrams illustrating modifications of the ladder diagrams of Figs. 16 and 18, respectively, for implementing aspects of the invention.

### DETAILED DESCRIPTION

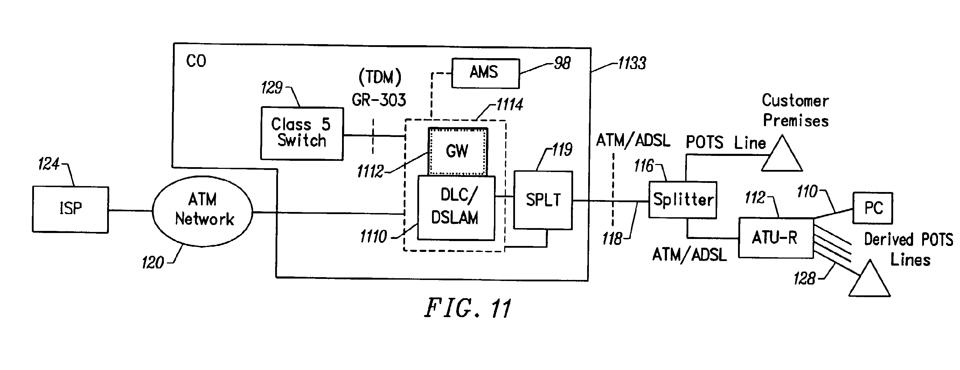

Fig. 11 is a block diagram of gateway network architecture that can be used to implement loop emulation services. All of the customer premises equipment can be the same as that shown in Fig. 1. However, instead of providing the gateway function in a centralized unit behind the ATM network, the gateway function is provided locally, at the DSLAM, before cells are provided to the ATM network 120. A TDM access multiplexer such as a digital loop carrier (DLC) is integrated together in the same unit as the DSLAM, and the gateway function operates between these two functions. Basically, therefore, the gateway function is integrated in a combined DLC/DSLAM node.

In particular in Fig. 11, the DLC and DSLAM exist together in a single Litespan ADSL system described, for example, in the above-incorporated Nattkemper, et al. patent. As shown in Fig. 11, the ATM-over-ADSL link 118 is connected to the combined DLC/DSLAM 1110, which has been modified to include its own gateway function 1112. The gateway function 1112 is integrated into the DLC/DSLAM access node 1114. In the access node 1114, subscriber ATM cells carrying TDM data are routed to the gateway 1112, which extracts the TDM data and transmits it, for example via a GR-303 or TR-08 link, to the local Class 5 switch 129 located in the same CO 1133 that houses the access node 1114. No connection to a second Class 5 switch such as 126 (Fig. 1) is required. In the reverse direction, TDM traffic from the Class 5 switch 129 destined for derived line 128 arrives at the gateway 1112, which encapsulates it into ATM cells and transmits it, via the DLC/DSLAM 1110, onto the proper ATM-over-ADSL subscriber link 118. The DLC/DSLAM continues to route conventional ATM cells back and forth between the ATM network 120 and the ATM subscriber DSL link 118. The gateway 1112 and the ATU-R 112 perform standard AAL-2 encapsulation and signaling, using standard profiles, in order to encapsulate loop traffic and signaling in ATM cells.

As used herein, "switching" refers to the conveyance of traffic from one of a plurality of interfaces to a selectable one of another of a plurality of interfaces. The set of input interfaces can be the same as, completely distinct from, or partially overlapping with, the set of output interfaces. A "switch" typically incorporates or makes reference to a database indicating a mapping of input channels to output channels. For ATM switches, the database indicates, among other things, which ATM output interface is to be used for forwarding incoming cells having a particular ATM destination address. For TDM switches, the database indicates, among other things, which TDM output interface, and which time slot on that TDM output interface, should be used for forwarding incoming data in each time slot of an incoming TDM interface.

Also as used herein, "multiplexing" refers to the merging of data from a number of input interfaces of a lower bit rate, onto a smaller number of output interfaces having a higher bit rate. "Demultiplexing" refers to the opposite process. Typically telephony traffic multiplexers multiplex data from N incoming interfaces onto one outgoing interface having N-times the data rate of the input interface. Telephony multiplexers may or may not also perform switching, and telephony switches may or may not also perform multiplexing.

Also as used herein, "routing" is an umbrella term which includes switching, multiplexing, or both.

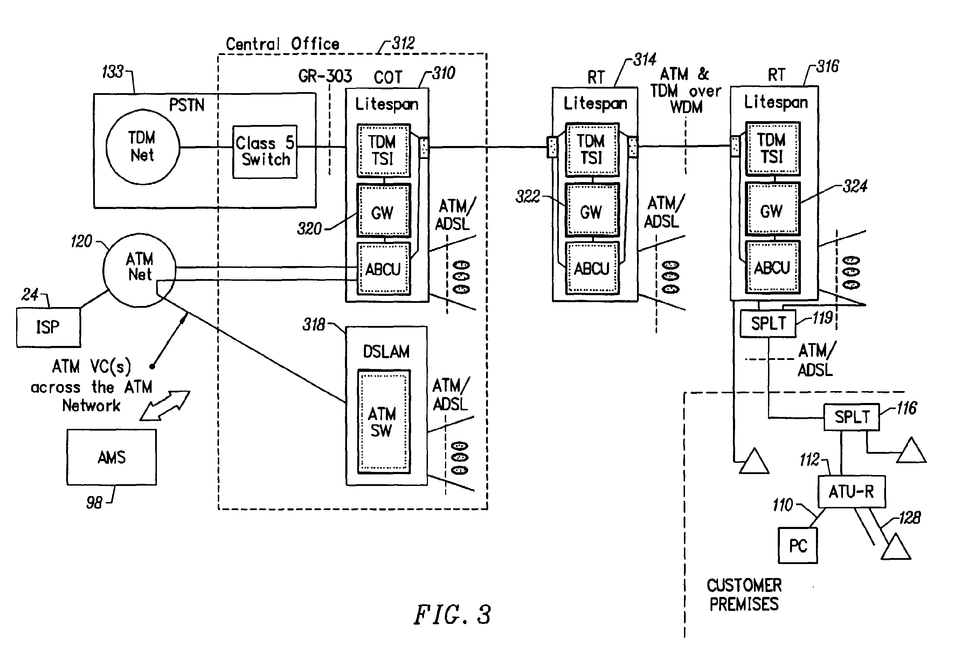

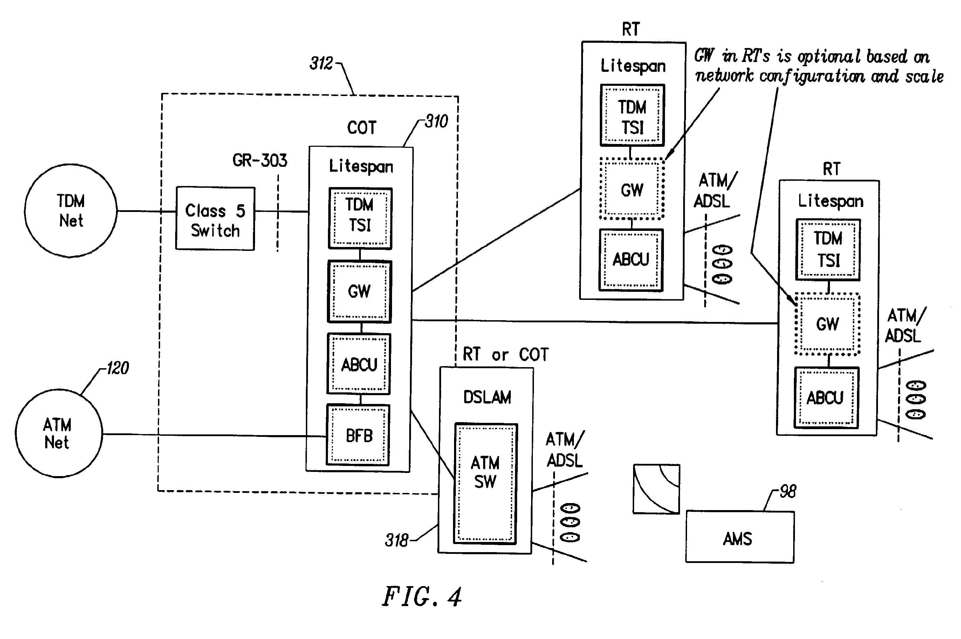

Fig. 3 is a block diagram illustrating one implementation of integrated gateway loop emulation services, which takes advantage of the integration between TDM and ATM processing in the Litespan ADSL system. The Litespan ADSL system includes a Litespan central office terminal (COT) 310 located in a service provider's central office 312, and a plurality of remote terminals (RTs) 314 and 316, at remote locations outside the central office 312. Each Litespan terminal 310, 314 and 316 which participates in the loop emulation service includes at least one Litespan ADSL channel bank (CBA). A Litespan ADSL channel bank includes 0 or more narrowband line units and one or more ADSL line units (ADLUs), all of which communicate over a backplane with an ADSL bank control unit (ABCU). The ABCU performs both TDM time slot interchange (TSI) functions, as well as ATM access multiplexing for the ADLUs in the channel bank containing the ABCU. Each terminal is a separate unit and is managed as a separate network node, but both TDM and ATM access multiplexing functions are integrated together in the node. According to the embodiment illustrated in Fig. 3, a separate gateway function is incorporated onto each of the ABCUs in each of the Litespan ADSL channel banks in each of the terminals in the Litespan system. Alternatively, another embodiment can provide a gateway function on only one ABCU per Litespan terminal in the overall Litespan system. Fig. 4 shows yet another embodiment, which includes only a single gateway function for the entire Litespan system. In the illustration of Fig. 4, the required gateway function is located on an ABCU in the COT, and the gateway functions on ABCUs within remote terminals are optional.

The gateway functions illustrated in the embodiments of Figs. 3 and 4 are viewed from the core ATM network 120 and the ATM switch fabric in Litespan system merely as addressable ATM nodes. Thus, in the general case, any of the gateway functions in the Litespan system can perform gateway services for subscribers connected to any other ATM port from which that gateway function is reachable. For example, Fig. 3 illustrates a separate DSLAM 318, which does not itself provide any native TDM routing, connected across the ATM network 120 to the Litespan system of Fig. 3. Such an arrangement permits any of the gateway functions 320, 322 or 324 to provide derived line service to any subscriber connected via an ATM link to the DSLAM 318, in the same manner that stand-alone gateway 130 in Fig. 1 provides derived line service for ATM-over-ADSL customers connected to any of the DSLAMs 114 and 122. The DSLAM 318 in Fig. 3 is shown located at the same central office 312 as the Litespan COT 310, but in another embodiment, DSLAM 318 can be located physically elsewhere.

In Fig. 4, the DSLAM 318 connects directly to an ATM port of the Litespan COT 310 (e.g., continuing the Litespan ADSL daisy-chain), rather than connecting through the ATM network 120.

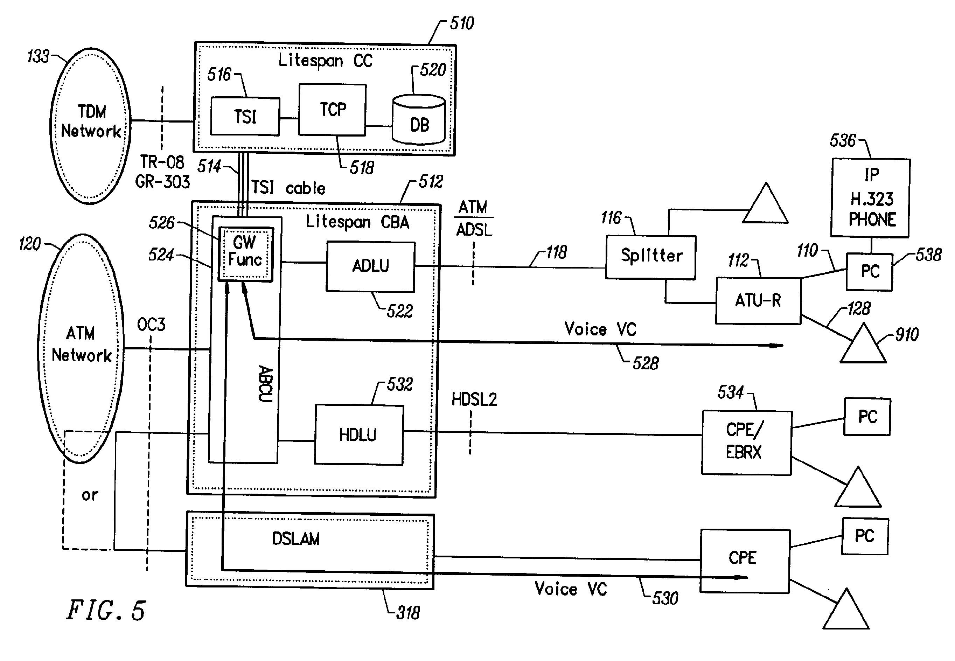

Fig. 5 illustrates other aspects of an implementation of the invention in a Litespan ADSL terminal. The terminal includes a common control unit 510, a Litespan ADSL channel bank (CBA) 512, and a TSI (Time Slot Interchange) cable 514 interconnecting them. The Litespan common control unit 510 includes a TSI card 516, a terminal control processor (TCP) 518, and a database (DB) 520. The Litespan CBA 512 includes an ADSL Line Unit (ADLU) 522 connected across the backplane to the ABCU 524. The ADLU 522 provides the ATM-over-ADSL drop 118. The gateway function 526 is integrated onto the ABCU card 524. TDM traffic on the network side of the ABCU 524 is connected via the TSI cable 514 and the Litespan common control 510 to the TDM network 133, whereas ATM traffic on the network side of the ABCU 524 is connected to the ATM network 120. It can be seen that a derived voice VC 528 is created between a TDM port 128 at the customer's premises and the gateway function 526, which provides the gateway to the TDM network 133 via the TSI cable 514 and common control 510. It can be seen also that another derived voice VC 530 is provided between the customer premises equipment (CPE) and the gateway function 526 via the separate DSLAM 318 and, optionally, through the ATM network 120.

Fig. 5 also points out that ADSL is not the only physical layer protocol over which derived-line ATM cells can be carried. For example, the Litespan CBA 512 also includes an HDSL line unit (HDLU) 532, which provides an HDSL2 port carrying ATM cells back and forth to other downstream equipment, such as a further ATM multiplexer and/or customer premises equipment 534.

Fig. 5 also illustrates that a conventional analog POTS port is not the only type of user port that can be used in derived line service. In Fig. 5, an IP H.323 telephone 536 is connected to a personal computer (PC) 538, which is connected to the ATU-R 112 via IP data network 110. The IP H.323 telephone 536 conforms to the ITU-TH.323 recommendations incorporated above. The ATU-R 112 converts IP H.323 data to ATM AAL2 derived POTS line cells, and visa versa. In the embodiment of Fig. 5, the gateway function 526 can enable derived line service via the IP H.323 telephone 536. In other embodiments, derived lines can be supported via PC speakers and microphones connected to the PC 538, or RJ11 jacks for normal telephone sets. This can be accomplished with an internal network interface card, or via software in the PC. In yet another embodiment, certain kinds of IP base telephones can be connected directly to the data network 110 without a PC 538, in which case the H.323 telephone digitizes the analog signal and transports it over IP-over-Ethernet to the ATU-R 112, which extracts the voice signal and re-encapsulates it into ATM AAL2 cells for transmission toward the gateway 526. The opposite functions are performed in the downstream direction.

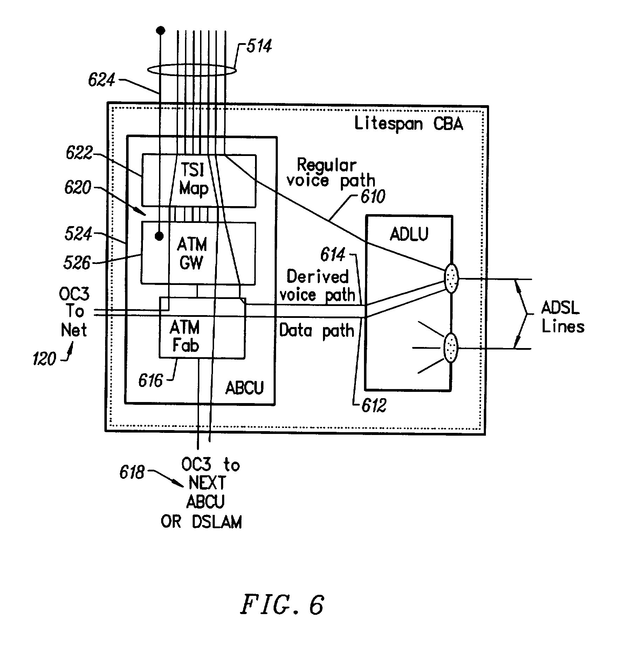

Fig. 6 illustrates the Litespan CBA 512 of Fig. 5, and illustrates a conventional voice path 610 and a conventional data path 612 through the CBA 512. Fig. 6 also points out some specific functions performed by the Litespan. In particular, the ATM switching fabric 616 on the ABCU 524, in addition to routing TDM-over-ATM cells from the derived voice path 614 to the gateway 526, also routes TDM-over-ATM VCs from the ATM network to the gateway 526 and from further chained ABCU's or DSLAMs to the gateway 526. The gateway 526 terminates the TDM-over-ATM VCs and extracts the TDM data. The gateway 526 then places the TDM data into an appropriate 64kbps time slot or slots on the SBI (Subscriber Bus Interface) bus 620. The gateway 526 also performs echo cancellation and compression/decompression of cells with silence and 64kbps voice. Furthermore, any POTS signaling which had been encoded into AAL-2 cells are converted into out-of-band (OOB) ABCD signaling over the SBI 620 toward the Litespan common control 510 via a dedicated TCP messaging channel 624. In this manner, the gateway 526 performs TDM signaling toward the common control on behalf of the customer premises equipment connected to the derived POTS port.

The TSI map function 622 is the same TSI map function as previously existed in the ABCU prior to integration of gateway 526. It maps time slots on the TSI cable 514 both to time slots on the conventional SBI bus 610 on the CBA backplane, as well as to time slots on the SBI buses 620 connected to the TDM side of gateway 526. In addition, the database 520 in the Litespan common control 510 (Fig. 5) is expanded to permit provisioning of virtual POTS ports or other virtual TDM services provided by the derived line feature.

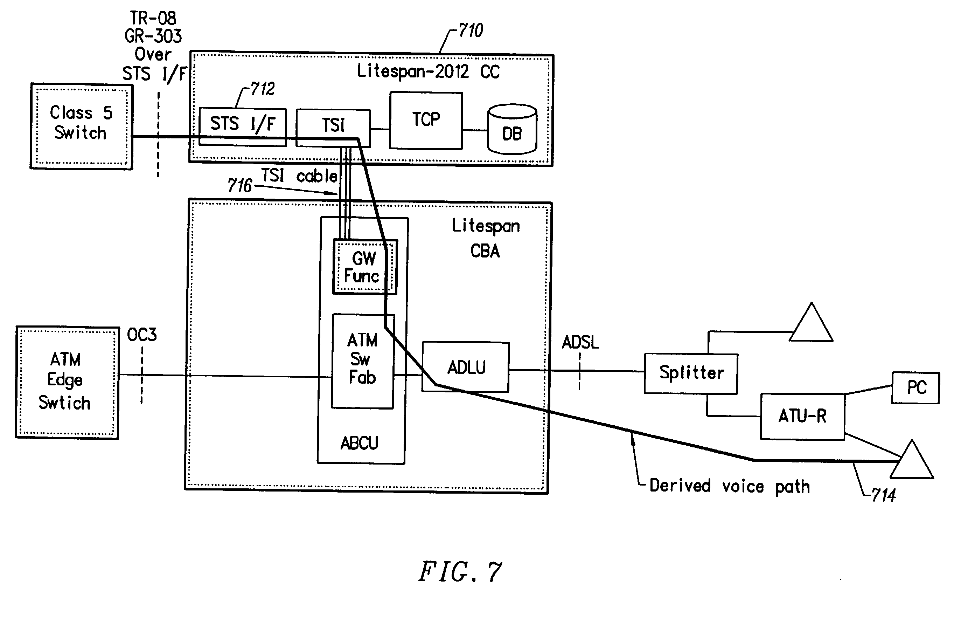

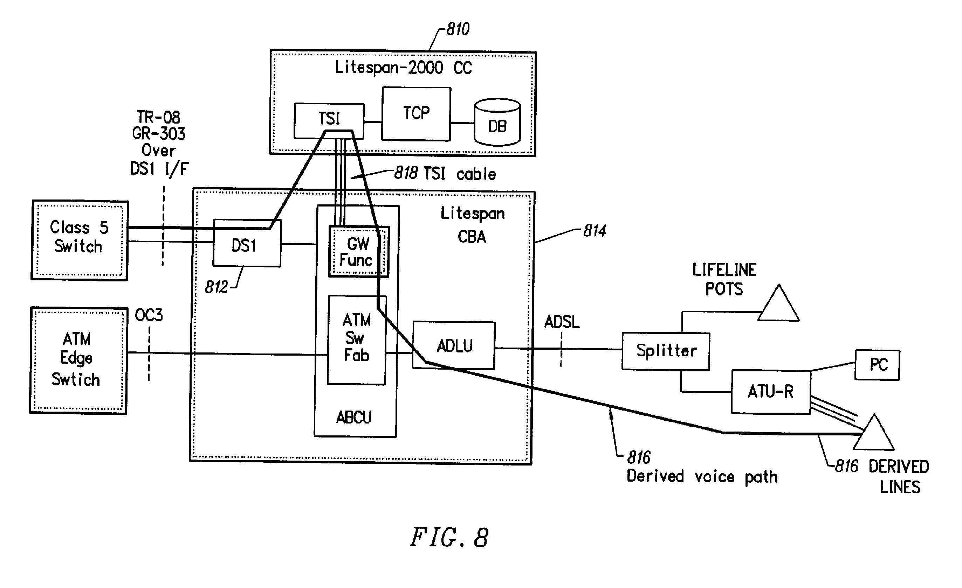

Figs. 7 and 8 compare implementation of the invention on a Litespan-2000 terminal to implementation on a Litespan-2012 terminal. Fig. 7 illustrates an implementation on a Litespan-2012 terminal. In a Litespan-2012 terminal, the common control unit 710 can include an STS interface 712. Thus, the derived voice path 714 is carried over the TSI cable only once for each direction of traffic flow. Fig. 8 illustrates an implementation on a Litespan-2000 terminal. In a Litespan-2000 terminal, the common control unit 810 does not include an interface to the TDM network. Rather, the connection to the TDM network takes place via a DS1 card 812 in the Litespan CBA 814. In this case, the derived voice path 816 makes a round trip across the TSI cable 818 for each direction of traffic flow.

As mentioned, for the loop emulation services described herein, TDM traffic is encapsulated into ATM cells using standard AAL-2 encapsulation. The AAL-2 standard defines multiple "profiles" for carrying voice in different encoding schemes, such as PCM-64, ADPCM-32 and ADPCM-40, and the 99-0392 profile incorporated above, for example. Use of such standard profiles or other profiles not currently part of the AAL-2 standard are all envisioned within the scope of the invention.

Standard AAL-2 service specific convergence sublayer (SSCS) signaling, preferably using channel associated signaling (CAS) as the default for narrowband, is used as the signaling scheme between the CPE and the gateway. This is based on 8-byte signaling PDUs that are carried in-band with the voice information in their respective voice channels. The signaling PDUs carry the in-band ABCD signaling bits for POTS. Nevertheless, if both ends of the interface support common channel signaling (CCS), then the signaling described in ITU-T Recommendation Q.931 above, can be used for narrowband signaling.

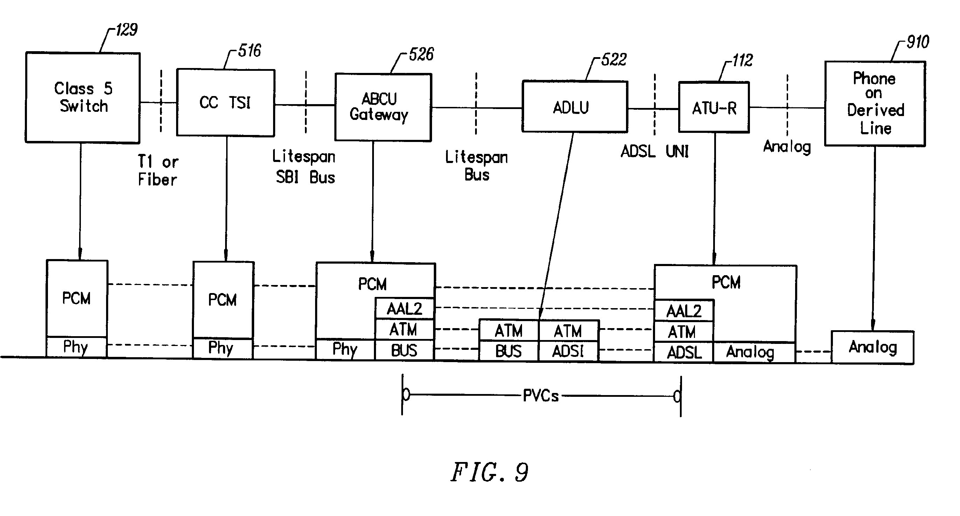

Fig. 9 illustrates the communication protocols used between the CPE 910 and the Class 5 switch 129 to support the derived line 528 illustrated in Fig. 5. Referring to Fig. 9, the telephone or other CPE 910 at the customer premises communicates the analog signals to the ATU-R 112. ATU-R 112 converts the analog signals to a pulse code modulation (PCM) form, and then encapsulates the PCM data into AAL-2-over-ATM cells. It then transmits the ATM cells using the ADSL physical layer protocol to the ADLU 522 in the Litespan CBA 512. The ADLU 522 extracts the ATM cells and transmits them via the CBA 512 backplane SBI bus upstream to the ABCU 524, which examines the ATM cells and determines from the VCI in such cells that they should be routed to the gateway function 526. The gateway function 526 extracts the PCM voice samples from the AAL-2 ATM cells and transmits them upstream on the Litespan SBI bus and TSI cable 514 to the TSI card 516 in the Litespan common control 510. The TSI card 516, either via an STS interface in the common control 510 (see Fig. 7) or via a DS 1 interface in the CBA 512 (see Fig. 8), forwards the voice samples up to the Class 5 switch 129. The reverse set of protocol conversions is performed in the downstream direction.

The ATU-R 112 and the ABCU gateway 526 are provisioned such that the ATM AAL-2 cells are transmitted between the two units using an ATM permanent virtual circuit (PVC). In another embodiment, the communication between these two end points can occur via a switched virtual circuit (SVC), as described in ITU specification Q.2931. Also, whereas the CPE illustrated in Figs. 5 and 9 consists of an analog telephone 910, communicating via an analog electrical signal with ATU-R 112, it will be appreciated that in another embodiment, the port on the ATU-R 112 can instead support purely digital Nx64kbps communication with the CPE 910. In this case, the user traffic carried on the derived "voice" line 528 can be circuit mode data services and no conversion to PCM in the ATU-R 112 is required. In yet another embodiment, the user traffic consists of frame mode data services which are communicated to the ATU-R 112 in digital form, and the ATU-R 112 encapsulates the frame mode data into ATM AAL-2 cells using the AAL-2 data service specific convergence sublayer (SSCS) as described in ITU Recommendation 1.366.1.

Returning again to the derived line 128 in Fig. 5, it will be appreciated that unlike conventional POTS service, there is no direct analog electrical connection between the CPE 910 at the customer premises and the Litespan CBA 512. Thus, well known POTS signaling behavior, such as lifting a handset off hook to start a call, replacing it on hook at the end of a call, and so on, need to be transmitted between the endpoints of the derived line using a different method. In the present embodiment, the ATU-R 112 and the gateway function 526 encode this information in special signaling ATM cells fully in accordance with ITU-T recommendation I.366.2 incorporated above. Narrowband calls consisting of audio, voice, voiceband data, and circuit mode data, are all encapsulated in accordance with I.366.2. For a conventional POTS circuit, subscriber signaling is performed toward the Litespan common control on the Litespan SBI bus by the conventional POTS narrowband line unit in the CBA on behalf of the CPE. In the opposite direction, the POTS line unit provides appropriate analog signaling toward the CPE in response to signaling codes received from the Litespan common control. In the derived lines embodiment of Fig. 5, it is the gateway function 526 which performs signaling on the Litespan SBI toward the common control 510 on behalf of the CPE 910, and it is the ATU-R 112 which performs analog signaling toward the CPE 910 on behalf of downstream signals received from the common control 510. The signaling cells conveyed between the gateway 526 and the ATU-R 112 carry not only control signaling, but also signaling for the purpose of minimizing bandwidth utilization on the DSL line 118 wherever possible.

All of the packet formats and procedures for encoding the different information streams for narrowband voice, voiceband data and circuit mode data transmissions are described in detail in ITU-T recommendation I.366.2 and will not be repeated here. In brief summary, however, the transmitting end of the TDM-over-ATM path performs at least the following functions, all described in 1.366.2:
a) Encoding of audio samples into a sequence of bits.
b) Selection of audio encoding algorithm based on the characteristics of a call and resource conditions, e.g. congestion indications.
c) Silence compression by voice activity detection and the discontinuous transmission of silence insertion descriptors.
d) Pass-through of circuit mode data as one 8 kHz octet stream per time slot.
e) Extraction of data frames and the removal of flags, bit stuffing, and CRC, if relevant.
f) Detection and preferential treatment of facsimile and modem traffic, e.g. higher-fidelity encoding.
g) Extraction of dialed digit codes from multifrequency tones.
h) Extraction of channel associated signaling bits and analysis of their transitions.
i) Demodulation of facsimile into baseband bits for page control and image data.
j) Detection of alarms.
k) Synchronized transfer of processed signals to the SSCS.
l) Requests and responses of user state control operations.

In addition, in different embodiments, the transmitting end can also perform one or more of the following functions, all described in detail in I.366.2:
a) Insertion of encoded audio bits into a packet structure.
b) Indication of the algorithm used through fields of the packet header (e.g. UUI codepoint and length indicator) or packet payload.
c) Insertion of SID bits and indication of the SID used, just like any audio algorithm.
d) Insertion of octet streams into a packet structure based on time slots.
e) Segmentation, with error protection, of data frames into a sequence of packets.
f) Insertion of encoded bits for voiceband data and indication of the algorithm used, just like any other audio.
g) Insertion of dialed digit codes into a distinguished packet structure.
h) Insertion of channel associated signaling bit transitions into a distinguished packet structure.
i) Insertion of facsimile baseband bits into packet structures distinguished for this purpose.
j) Insertion of alarms into a distinguished packet structure.
k) Sequence numbering of packets to assist isochronous reconstruction of information streams at the receiver.
l) Generation of user state control messages.

The receiving end of the TDM-over-ATM path performs the following functions, all described in detail in I.366.2:
a) Identification of incoming packet types, determined by fields of the packet header or packet payload.
b) Buffering of time-sensitive packets to reduce delay variation (build-out for dejittering).
c) Attention to sequence numbers in the timely release of packet contents to the User, e.g. discard of late packets.
d) Extraction of algorithm identification and encoded audio bits from packet structure.
e) Indication of any unrecoverable gaps in the bit stream.
f) Extraction of octet streams from a packet structure based on time slots.
g) Reassembly, with error detection, of data frames from a sequence of packets.
h) Extraction of dialed digits codes.
i) Extraction of channel associated signaling bit transitions.
j) Extraction of facsimile baseband bits.
k) Extraction of alarms.
l) Interpretation of user state control messages.

The receiving end can also perform one or more of the following functions as well, all described in detail in I.366.2
a) Recognition of the encodings applied to an information stream.
b) Removal of any delay variation introduced by User decoding.
c) Synchronized transfer of encoded information from the SSCS.
d) Decoding of audio bits into a sequence of audio samples, including comfort noise generation as directed by silence insertion descriptors.
e) Attempting to mask the error perceptually if expected audio bits are missing.
f) Regeneration of circuit mode data as one 8 kHz octet stream per time slot.
g) Regeneration of data frames and the restoration of flags, bit stuffing, and CRC, if relevant.
h) Regeneration of multifrequency tones from the dialed digit codes.
i) Regeneration of channel associated signaling from the bit transitions.
j) Remodulation of facsimile from the baseband bits.
k) Interpretation of alarms.
l) Indications and confirms of user state control operations.

The ATM AAL-2 specifications permit the sender and receiver to choose any of several possible options on the user plane, the control plane and in the management plane. On the user plane, the gateway 526 and ATU-R 112 preferably implement ATM Forum predefined profile 7, specifying an AAL-2 cell carrying 33 bytes of 64kbps µ-law PCM and ADPCM-32 as the default voice CODEC profiles. In addition, the gateway 526 and the ATU-R 112 also implement an extensible means of negotiating other voice CODEC implementations as well. Furthermore, the CPE is designed preferably so that the default means of clock synchronization between the CPE and the Litespan is an adaptive clocking algorithm based upon the receipt of downstream voice cells from the Litespan. On the control plane, the gateway function 526 and the ATU-R 112 each preferably support Channel Associated Signaling (CAS) as a default. Preferably, each also supports Common Channel Signaling (CCS), and includes a detection mechanism to determine whether the other supports enhanced CCS capabilities. The CAS ABCD signaling bits are incorporated into an AAL2 Type-3 (UUI=24) packets with a specific predefined value in the header field.

On the management plane, the gateway function 526 and ATU-R 112 preferably implement a Loop Start default service type. If a POTS port on the ATU-R 112 is out of service or otherwise unprovisioned, then the Litespan merely rejects call initiation from the ATU-R 112 on that channel (i.e., denies dialtone). Otherwise, voice services for the CPE 910 are managed by the Class 5 switch 129 through the TR-08, GR-303, or V.52 interface with the Litespan.

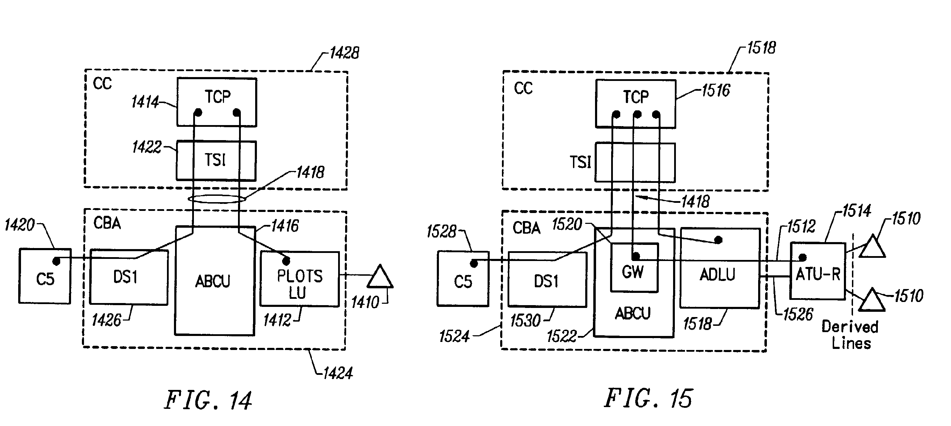

Fig. 14 illustrates symbolically the messaging flow for conventional POTS service from a Litespan. The CPE 1410 is connected via an analog link to the POTS line unit 1412, which communicates signaling information with the TCP 1414 in the Litespan, Common Control 1428 via a subscriber bus data link (SBDL) that is associated with the particular card slot containing the POTS line unit 1412. Messages are transported on the SBDL from the POTS line unit 1412, along a backplane bus to the ABCU 1416, up the TSI cable 1418 to a TSI card 1422 in the common control 1428 and on to the TCP 1414 where the messages are terminated. The reverse path is used for downstream signaling methods. For signaling messages to the Class 5 switch 1420, standard TR-08 or GR-303 signaling is provided from the TCP 1414, back down the TSI card 1422, down the TSI cable 1418, and down to the ABCU 1416. The ABCU 1416 routes the signaling messages in TDM form across the CBA 1424 backplane to a DS1 card 1426, which further routes them out to the Class 5 switch 1420. Downstream signaling flows from the Class 5 switch 1420 to the TCP 1414 follow the same path in reverse.

The data and signaling format on the TSI cable 1418, both between the POTS line unit 1412 and the TCP 1414, and between the TCP 1414 and the Class 5 Switch, are described in the above-incorporated U.S. Patent No. 5,889,773 and in the above-incorporated TR-08 and GR-303 specifications, and therefore will not be repeated here. Briefly, however, it is noted that narrowband traffic within the Litespan terminal is carried in 1-millisecond superframes each having eight 125-microsecond frames to permit the transport of bit oriented signaling associated with standard telephony traffic. Each frame has a subscriber bus interface (SBI) format comprising a 32-byte timeslot data stream, each timeslot byte having a 16-bit interleaved data format such that two separate bit interleaved data streams are supported by SBI format. The odd bit positions of the 16-bit interleaved data format carry the actual transported narrowband data (both in-band and out-of-band), and the even bit positions are not used on the TSI cable. On the CBA 1424 backplane, the odd bit positions can be used to carry upstream ADSL data. The SBI format carries internal system communication, and the user information with out-of-band bit oriented signaling for twenty-four DS-0 signals or one VT1.5 signal.

The 32-byte timeslot data stream of the SBI format is divided into overhead channels of a reserved byte R, bit oriented signaling bytes SIG, internal datalink bytes SRQ (Service Request), a framing byte, and data channels of digital signal level zero signal (DS0) channel bytes 01-24. The twenty-four DS0 data channel bytes, when carrying audio, are carried in a pulse code modulated format. They are distributed across the 125-microsecond frame in sets of three channels in order to evenly distribute the overhead channels across the 125-microsecond frame and permit minimal buffering for conversion to digital signal level one (DS1) signals. The data for the DS0 channel bytes, when carrying audio, are placed in the SBI format in an inverted standard µ-law format in order to provide quiet pulse code modulation when a POTS line card is removed or loses power. Bit oriented signaling bytes SIG transport the standard AB or ABCD signaling used on T1 systems to support 4-state and 16-state signaling modes as well as the unique signaling mode described in the Bellcore TR-08 specification incorporated above. Datalink bytes SRQ and SBDL provide a communication capability with TCP 1414. A unique byte value is transported in the R and SRQ bytes of the eighth frame of a superframe in order to identify a boundary for each superframe.

Fig. 15 illustrates the messaging flows that take place for derived line loop emulation service in a Litespan terminal. Referring to Fig. 15, the messaging channel 1512 between the ATU-R 1514 and the TCP 1516 in the Litespan common control 1518 is as follows. Signaling information is encapsulated into AAL2 ATM cells as previously described for transport between the ATU-R 1514 and the gateway 1520 in the ABCU 1522 of a Litespan CBA 1524. The ATM cells are transported on the ADSL link 1526 between the ATU-R 1514 and the ADLU 1518, and then on the CBA backplane bus to the ABCU 1522 in the CBA 1524. The ATM path is terminated at the gateway 1520, but the messaging path then continues via a common ABCU SBI/SBDL control channel up the TSI cable 1418 to the TCP 1516. The signaling between the TCP 1516 and the Class 5 switch 1528 is unchanged. Downstream signaling flow follows the same paths in reverse.

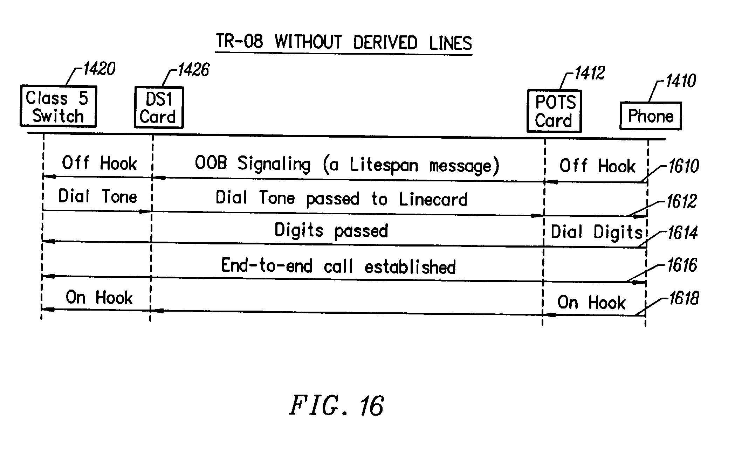

Fig. 16 is a simplified ladder diagram illustrating conventional TR-08 call origination flow using the structure of Fig. 14. At time 1610, when a customer takes the telephone 1410 off hook, electrical circuit completion is detected by the POTS line unit card 1412, which then transmits the off-hook message via out of band Litespan signaling, and via TCP 1414 to the DS1 card 1426, which then transmits an off-hook signal state to the Class 5 switch 1420. At time 1612, the Class 5 switch 1420, in response to the off-hook signal from the Litespan, transmits a dialtone back to the DS1 card 1426. The DS1 1426 passes the dialtone back to the line card 1412, which passes it on to the phone 1410. At time 1614, the customer dials digits on the telephone 1410, which are transmitted all the way up to the Class 5 switch 1420. End-to-end call establishment then takes place between the Class 5 switch 1420 and telephone 1410 at time 1616. Finally, at the conclusion of the conversation, the customer hangs up the telephone 1410 (time 1618). An electrical open circuit is detected by the POTS line unit card 1412, which transmits the on-hook signaling via Litespan out of band messaging to the DS1 card 1426, which finally transmits the on-hook signal up to the Class 5 switch 1420. The on-hook and off-hook signaling from the DS1 card to the Class 5 switch is in band signaling. The TCP 1414 does not intervene at all in the messaging between the Class 5 switch and the telephone 1410, except to provide proper time slot mappings from the POTS card 1412 to the DS1 card 1426.

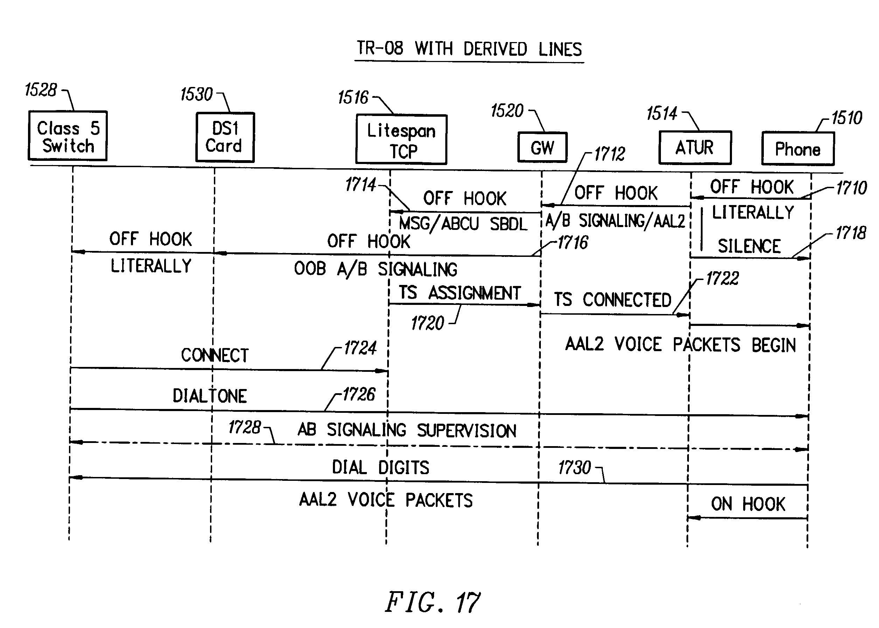

Fig. 17 is a simplified ladder diagram illustrating call origination from a POTS telephone 1510 using the derived lines structure of Fig. 15. In step 1710, the customer takes the telephone 1510 handset off hook. In step 1712, the ATU-R 1514 detects the off-hook condition and signals it to the gateway 1520 via AAL2 ATM packets as previously described. The gateway 1520 terminates the ATM path and forwards the off-hook signaling to the Litespan TCP 1516 via the ABCU SBDL as previously described (Step 1714). In Step 1716, the gateway 1520 also originates an off-hook message via Litespan out-of-band A/B signaling, through the TCP 1516, to the DS1 card 1530. The DS1 card 1530 responds as in step 1610 (Fig. 16) to signal off-hook, via in-band signaling, to the Class 5 switch 1528. While the Class 5 switch 1528 is processing the off-hook signal, the ATU-R 1514 is providing silence to the telephone 1510 (Step 1718). Also, in Step 1720, the Litespan TCP 1516 is assigning a TSI time slot for this call and transmitting the assignment to the gateway 1520. When the time slot assignment message is received by gateway 1520, it so signals the ATU-R via AAL2 signaling (Step 1722) and AAL2 voice packets between the ATU-R 1514 and Gateway 1520 can begin.

Eventually, in Step 1724, the Class 5 switch 1528 sends a connect message back to the Litespan TCP 1516 via the DS1 card 1530, and sends an in-band dial tone from the Class 5 switch 1528 all the way to the telephone 1510 (Step 1726). AB signaling supervision then takes place between the Class 5 switch 1528 and the telephone 1510 (Step 1728). Dialed digits and voice data are then transmitted between the telephone 1510 and the Class 5 switch 1528 in the manner previously described (Step 1730).

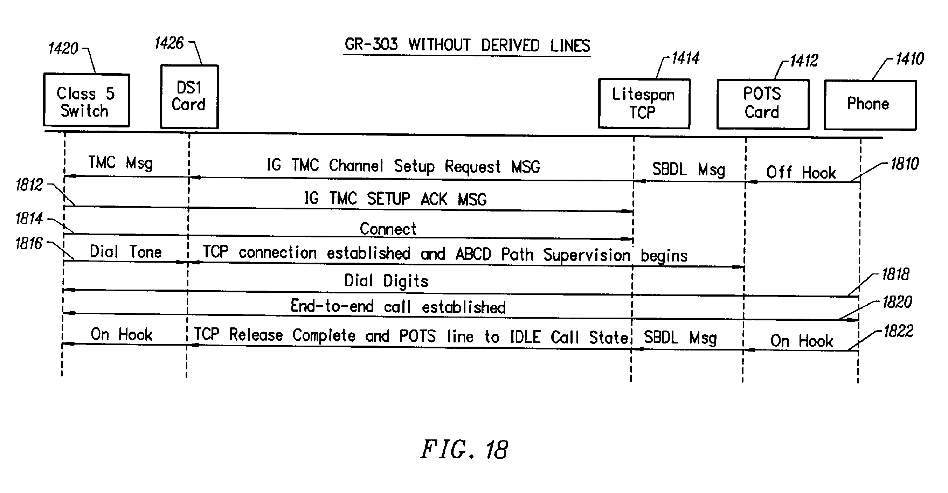

Fig. 18 is a simplified ladder diagram illustrating conventional call origination in the structure of Fig. 14, using a GR-303 interface to the Class 5 switch 1420. At time 1810, the telephone 1410 goes off hook. The POTS line card 1412 detects this condition and sends an off-hook SBDL message to the Litespan TCP 1414, which then sends a channel set-up request message to the Class 5 switch 1420 via the interface group (IG) Time slot Management Channel (TMC). At time 1812, the Class 5 switch 1420 transmits an IG TMC set-up acknowledgment message back via the DS1 card 1426 to the TCP 1414, indicating a DS0 assignment for the new call. The Class 5 switch at time 1814 also sends a connect message to the Litespan TCP 1414. The TCP 1414 cross-connects the DS0 of POTS card 1412 to the Class 5 DS1 time slot as assigned by the Class 5 switch. At time 1816, the Class 5 switch transmits a dialtone. The TCP connection is established and ABCD path supervision takes place between the DS1 card 1426 and the POTS line unit card 1412. The telephone 1410 transmits dialed digits in-band all the way to the Class 5 switch, the end-to-end call is established, and eventually at time 1822 the customer replaces the handset on hook at the telephone 1410. The POTS line unit 1412 transmits the on-hook indication to the TCP 1414 via the SBDL time slot of the POTS card 1412. The TCP 1414 then releases the communication path and changes the POTS line to idle call state. It also signals the DS1 card 1426 to signal the on-hook condition to the Class 5 switch 1420.

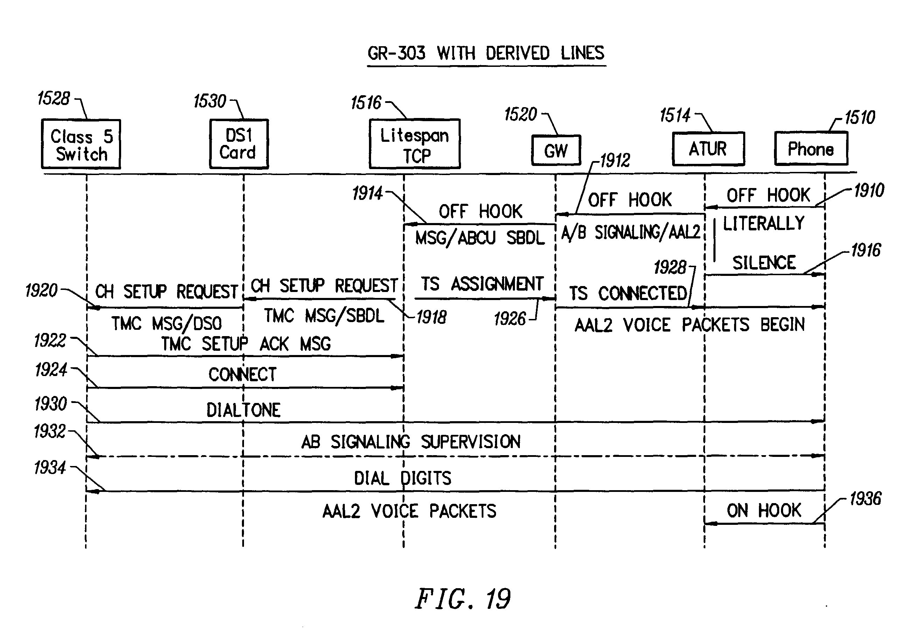

Fig. 19 is a simplified ladder diagram illustrating call origination in the derived lines structure of Fig. 15, where the interface between the Litespan and the Class 5 switch 1528 is a GR-303 interface. In step 1910, the customer takes the phone 1510 offhook. In Step 1912, the ATU-R 1514 detects the off-hook condition and so signals the gateway 1520 via A/B signaling over AAL2 cells as previously described. In Step 1914, the gateway 1520 further transmits the off-hook to the Litespan TCP 1516 via the ABCU's SBDL as in Fig. 17. Meanwhile, the ATU-R 1514 transmits silence (Step 1916) to the telephone 1510. In Step 1918, the Litespan TCP 1516 sends a channel set-up request via the SBDL to the DS 1 card 1530, which then forwards it via the TMC messaging DS0 to the Class 5 switch 1528 (Steps 1918 and 1920). The Class 5 switch 1528 responds with the TMC set-up acknowledgment message and the connect message (Steps 1922 and 1924). Without waiting for these messages, however, the Litespan TCP 1516 provides its own time slot assignment to the gateway 1520 (Step 1926). A time slot connected message is transmitted from the gateway 1520 to the ATU-R 1514 in Step 1928, and AAL2 voice packet transmission begins between the ATU-R 1514 and the gateway 1520. After the connect message is received by the Litespan TCP 1516 (Step 1924), in-band dial tone is transmitted from the Class 5 switch 1528 all the way to the telephone 1510 (Step 1930), AB signaling supervision takes place (Step 1932) and dialed digits and voice data are transmitted between the telephone 1510 and the Class 5 switch 1528 (Step 1934). Eventually, the customer replaces the handset on hook Step 1936).

The hardware and software with which a Litespan terminal implements the gateway functions described herein will now be described. The great majority of the relevant functions and hardware units are described in great detail in Nattkemper, et al. U.S. Patent No. 5,953,318, incorporated above, and that description will not be repeated here. Instead, only certain modifications to that system are described herein.

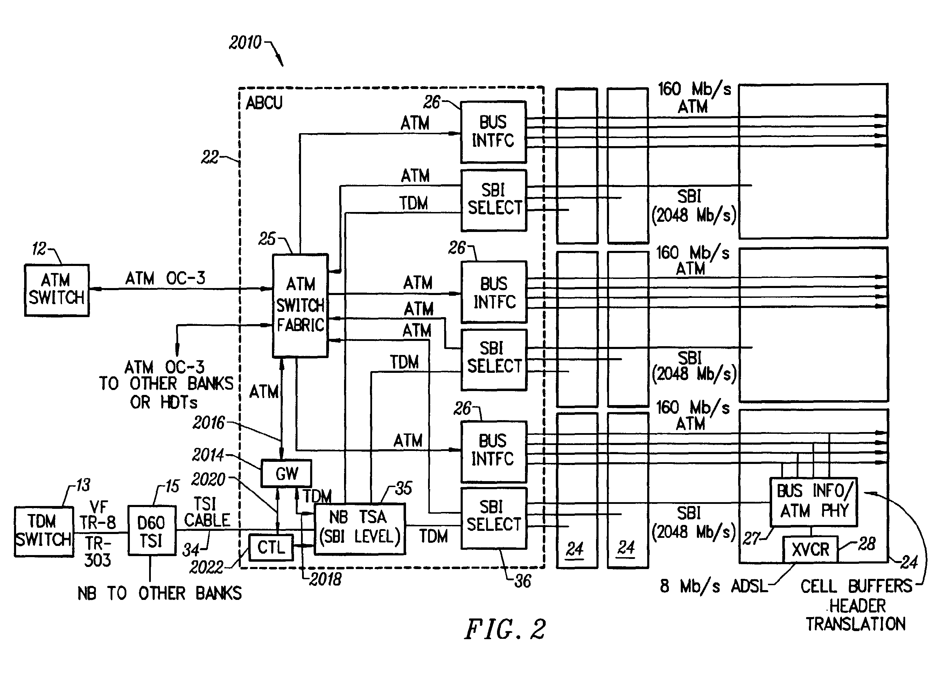

Fig. 2 is a block diagram of pertinent aspects of a Litespan CBA 2010. It includes an ATM bank control unit (ABCU) card 22 and a plurality of asynchronous digital subscriber line (ADSL) line cards 24. While ADSL line cards 24 are described herein with respect to the asynchronous digital subscriber line protocol, ADSL line cards 24 may be instead implemented with other appropriate transmission protocols. In general downstream operation, Litespan CBA 2010 receives ATM cells at the ATM switching fabric 25. ATM switch fabric 25 routes ATM cells between loop (ADSL) ports, network ports and upchain and downchain ports. The ADSL ports are located on the ADSL line cards 24. Each such card includes a bus interface 27 to extract the ATM cell and provide it to a transceiver 28 where the ATM cell is placed into the appropriate ADSL transmission format for transmission to a remote unit (not shown in Fig. 2). The remote unit processes the ADSL transmission received from ADSL line card 24 through a transceiver, physical layer unit, segmentation and resegmentation unit or other appropriate device and a user interface, for transmission to an end user.

ABCU card 22 also may receive downstream TDM traffic over the TSI cable 34 from TDM switch 13 through a switching device such as DLC system 15. ABCU card 22 includes a time slot assigner (TSA) 35 (also sometimes referred to herein as a TSI Mapping unit) that places the TDM traffic into the SBI format. The TDM traffic in the SBI format is provided to an SBI selector 36 and sent to the appropriate ADSL line card 24 for transmission to the end user.

In the upstream direction, ADSL line card 24 receives an ADSL or narrowband transmission from a remote unit and places the transmission into an appropriate ATM or TDM traffic stream at bus interface 27. The ATM and TDM traffic streams are transferred to a corresponding SBI selector 36 in order to provide the TDM traffic to time slot assignment 35 and the ATM traffic to ATM switch fabric 25.

The ABCU 22 also includes the gateway function 2014. The gateway 2014 has an ATM interface 2016, a TDM interface 2018, and an interface 2020 to a gateway controller 2022. The ATM interface 2016 of the gateway 2014 interfaces with the ATM switch fabric 25 in the same manner that any of the bus interfaces 26 and SBI selectors 36 interface with the ATM switch fabric 25. The TDM interface 2018 of the gateway 2014 interfaces with the narrowband TSA 35 in the same manner that the narrowband TSA 35 interfaces with any the SBI selectors 36. The gateway 2014 sets mappings for the derived line service matching the VCs connected between the gateway ATM interface 2016 and any of the ATU-Rs (not shown in Fig. 2), on the one hand, to TDM switch assignments for the TSA 35 and TDM switch 13, on the other hand. The software running in gateway controller 2022 establishes such mapping in response to the switching/provisioning commands from the Litespan common control. For GR-303 interfaces to the TDM switch 13, the Litespan common control software assigns GR-303 CRVs to SBI channels.

The ABCU gateway 2014 in Fig. 2 firmware supports the AAL2 encapsulation and voice processing based on standard profiles with DSP chips for a number of (e.g. 256) simultaneous connections per gateway. The Gateway 2014 also performs network echo cancellation and switched access to compression and echo cancellation for all derived line connections. The gateway 2014 and the ATU-R furthermore support fax-tone recognition and dynamic switch to 64 KBPS via CPE direction, with reserved access back at any time during a call. Silence compression in both directions is also supported. The gateway 2014 also recognizes upstream CAS digit messages for dialpulse and touchtone CPE signaling as well as GR-303/TR-08 in band tone regeneration.

The ATM interface 2016 is divided in half, one for each direction. Each half interface meets the Utopia interface specification described in the Utopia Specification incorporated above, with the following characteristics: Utopia Level 2; 16 Bit data exchange (16 bits in and 16 bits out); 32.768MHz clock; MultiPHY, 1 address assigned to the Gateway 2014; Polled, with 1 Transmit Cell Available and 1 Receive Cell Available; and Two transfer clocks (one in and one out); It also uses a Cell level handshake, and the load is 4 PHY, 1 ATM layer.

The TDM interfaces connect the Gateway 2014 to the Litespan's TSI cables. These cables transfer TDM voice, telephony signaling and SBDL communication channels from the line unit slots in the CBA to the TSI card in the CCA. Each TSI cable carries 60 SBI streams, one to and from each line unit slot. Normally the 24 TDM voice data time slots carried on each SBI carries TDM voice samples from its assigned line unit slot. These SBIs are synchronized to the Litespan master clock and use a frame synch pulse to indicate the start of frame. VoDSL uses unused time slots within these SBIs to exchange derived line voice samples with the CCA.

In the upstream direction the Gateway 2014 provides digitized derived line voice samples (64KHz µ-Law PCM) to an FPGA/ASIC which places the voice samples into the SBI stream. In the downstream direction the Gateway 2014 is provided with digitized voice samples (64KHz µ-Law PCM) from an FPGA/ASIC which has extracted them from the SBI stream.

The upstream TDM interface consists of multiple serial outputs that are clocked with an externally supplied synchronous clock. The serial stream is synchronized to an externally provided 125uS frame synch signal. The downstream TDM interface consists of multiple serial inputs that are clocked with an externally supplied synchronous clock. The serial stream is synchronized to the externally provided 125uS frame synch signal. The interface is symmetric: transmit and receive use the same time slot for the same voice channel.

The microprocessor physical interface, between the gateway 2014 and the gateway controller 2022, is the means by which the ABCU's microprocessor configures, tests, obtains status and exchanges messages with the Gateway 2014. Program code is downloadable into Gateway 2014 memory for execution.

Provisioning and configuration messages are sent to the Gateway 2014 from the ABCU's Microprocessor during normal operation to provision, configure, enable and disable voice connections and request status. Some of the more pertinent messages are set forth below. Greek letters are used to indicate values which are variables.
- Call provisioning messages are used to configure a particular WC (Virtual Voice Channel)
   ο Number of bits used for VPI, VCI and CID for call reference β
   ο Call reference β uses VPI = ρ, VCI = a and CID = τ
   ο Set audio profile for call β to 1 or 7 or hybrid
   ο Set CODEC for call β to PCM or ADPCM
   ο Set Echo canceler for call β to on or off
   ο Set initial received (upstream) ABCD signaling state for call β to ψ
   ο Set initial transmit (downstream) ABCD signaling state for call β to ψ
   ο Enable or Disable Fax/Modem tone detection and auto CODEC switch for call β
   ο Enable or Disable auto CODEC switch to match received CODEC for call β
   ο Enable or Disable downstream SID (Silence Insertion Descriptor) for call reference β
   ο When enabled, send SID cell for call reference β every γ milliseconds
   ο Call reference β uses SID value ω
- Setup call for call reference β (signaling bits indicate this call is going active)
- Tear down call reference β (signaling bits indicate this call has terminated)
- Enable or disable passing status messages from call reference β to the ABCU microprocessor

Messages are also sent from the Gateway 2014 to the ABCU's microprocessor during normal operation to provide status and report problems and in response to messages set forth above. Some of the more pertinent messages sent from the Gateway 2014 to the ABCU's microprocessor are Call status messages, such as the following.
- Call reference β is assigned to TDM time slot γ (tells the ABCU Microprocessor how to map the call to and from the Gateway 2014 from and to the SBI)
- Audio profile for call β is set to 1 or 7 or hybrid
- CODEC for call β is set to PCM or ADPCM
- Echo canceler for call β is on or off
- FAX or Modem tone has or has not been detected for call
- Current received (upstream) ABCD signaling state for call β is ψ
- Current transmit (downstream) ABCD signaling state for call β is ψ

The Gateway 2014 performs the AAL2 SAR (segmentation and re-assembly) function for both downstream and upstream messages. For downstream messages the ABCU's microprocessor passes the messages to the Gateway 2014 which formats them into an AAL2 PDUs (Protocol Data Units) and inserts them into the ATM cell stream. The ABCU's microprocessor keeps track of time and initiates those messages that must be sent at specific time intervals (such as CAS keep alive messages). Some of the more pertinent messages are as follows.
- AAL2 CAS message to transmit:
   ο When downstream ABCD signaling changes, the ABCU microprocessor alerts the Gateway 2014 to send a CAS signaling cell. These cells are sent three times at 5mS intervals. The Gateway 2014 automatically generates the second and third messages and send them at 5mS spacing. The Gateway 2014 automatically generates the 5 Sec. CAS keep alive message for each of the up to 1024 provisioned channels.
- AAL2 alarm message to transmit
- AAL2 status message to transmit (includes CO-IWF <-> CP-IWF embedded operations channel (EOC)).

For upstream messages the Gateway 2014 validates the ATM header via the HEC, validates the AAL2 header via the HEC and validates the AAL2 Type 3 PDU via the CRC and except for CAS signaling, passes the message along with the WC to which it belongs to the ABCU's microprocessor. The ABCU's microprocessor reserves enough queue space to buffer the maximum number of messages expected from the Gateway 2014 at any one time. Some of the more pertinent messages are as follows.
- Received AAL2 CAS message
   ο The Gateway 2014 maintains a table of the current signaling state of all 1024 upstream channels. The initial state for each table entry is provisioned. It alerts the ABCU microprocessor only when a CAS message signals a state change. It alerts the ABCU's microprocessor if the three redundant messages are not received, if the ABCD bits of the three redundant messages do not match and if the CAS keep alive message is not received every 5 Sec.
   ο Any time the Gateway 2014 changes the state of a channels signaling bits, it passes the new signaling bits to the microprocessor so that both remain in synchronization.
   ο Since the CP-IWF (customer premises interworking function, e.g. IAD) de-bounces signaling state changes before sending signaling changes to the CO-IWF, the Gateway 2014 does not have to perform this function. Instead it passes all signaling change it receives to the ABCU's microprocessor. Since signaling states change relatively slowly (a maximum of 20 pulses per second) the signaling state does not change over the 15mS period that the three redundant CAS signaling cells are sent. The Gateway 2014 performs per the following algorithm:
      - Receive the first of three CAS signaling PDUs (as indicated by the redundancy field)
         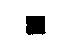 Reset the 3 signaling changed due to first, second or third PDU flags
         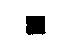 If the CRC over the Type 3 message is bad discard the message and increment error counter
         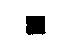 Else If the ABCD signaling bits are different from the current state
            * Send new ABCD bits to the ABCU microprocessor and store the new ABCD bits in the Gateway 2014
            * Set a flag indicating signaling changed due to the first CAS PDU
         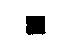 Else there was no signaling change so do nothing
         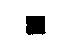 END
      - Receive the second of 3 CAS signaling PDUs (as indicated by the redundancy field)
         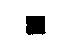 If the CRC over the Type 3 message is bad discard the message and increment error counter
         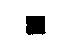 Else If the ABCD signaling bits are different from the current state
            * set a flag indicating signaling changed due to the second CAS PDU
            * Send new ABCD bits to the ABCU microprocessor and store the new ABCD bits in the Gateway 2014
         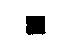 Else there was no signaling change so do nothing
         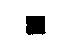 END
      - Receive the third of 3 CAS signaling PDUs (as indicated by the redundancy field)
         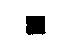 If the CRC over the Type 3 message is bad discard the message and increment error counter
         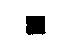 Else If the ABCD signaling bits are different from the current state
            * set a flag indicating signaling changed due to the third CAS PDU
            * Send new ABCD bits to the ABCU microprocessor and store the new ABCD bits in the Gateway 2014
         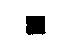 If the flags indicating signaling changed due to two or more CAS PDUs are set
            * Send an error message to the ABCU microprocessor and increment the "signaling changing too often" error counter
         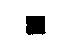 END
      - Received AAL2 alarm message
      - Received AAL2 status message

Since the gateway is an endpoint of the ATM connection, it detects OAM (Operations and Maintenance) F4 and F5 loopback cells and send them to the microprocessor. It also transmits (out the ATM Utopia Interface towards the ABCU's switch fabric) OAM cells that it is given by the microprocessor.

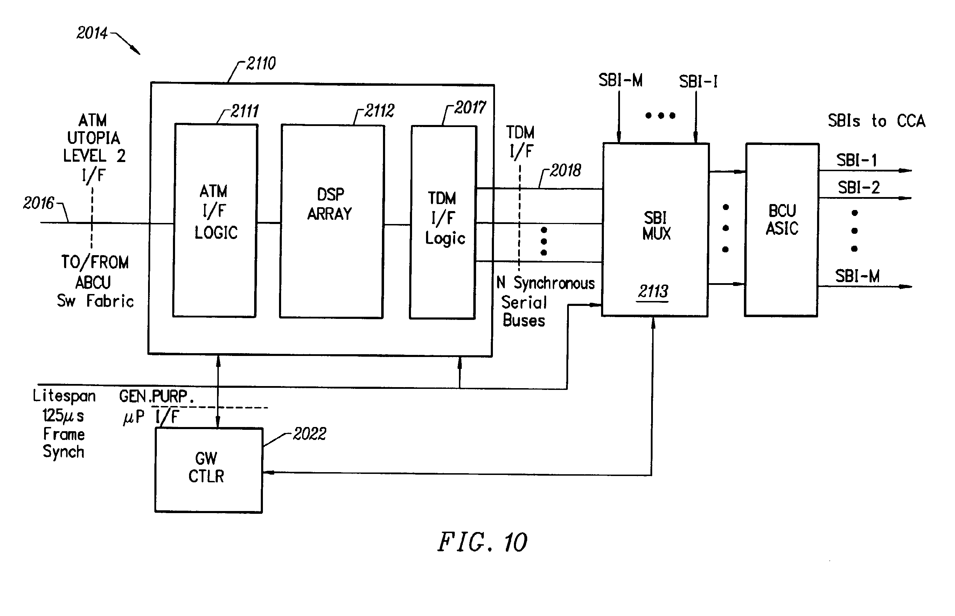

Fig. 10 symbolically illustrates functions performed by the various components of the gateway 2014 for conversion between the ATM and TDM formats. The gateway includes a DSP unit 2110 containing n DSP (Digital Signal Processor) cores in a DSP array 2112. For conversions from ATM to TDM format, incoming AAL2 cells are routed by ATM interface logic 2111 based on the UUI field. Voice cells are routed to an appropriate one of the DSP cores in the DSP array 2112. The DSP cores process the cells as described herein, extracting PCM voiceband samples and transmitting them out the TDM interface 2018 to an SBI multiplexer 2113 via TDM interface logic 2017. The ATM interface logic 2111 routes signaling, status, alarm (AAL2 type 3) and OAM cells out of the DSP unit 2110, to gateway controller 2022. The gateway controller 2022 extracts ABCD signaling bits for each channel and transmits them to the microprocessor interface ofthe SBI multiplexer 2113. The SBI multiplexer 2113 multiplexes DS0s onto the SBIs toward the individual line units 24 (Fig. 2), and inserts signaling from the gateway controller 2022. The gateway controller 2022 also programs the ATM VC/CID (call ID)-to-DSP map in the DSP unit 2110, and programs the DSP-to-SBI map in the SBI multiplexer 2113.

For conversions from TDM to ATM format, the TDM data from the TSI cable 34 is provided to SBI multiplexer 2113 which extracts signaling and maps the individual incoming DS0s to appropriate DSP cores in DSP unit 2110. Voiceband data is passed to the TDM interface 2018 of the DSP unit 2110. The TDM interface logic 2017 in DSP unit 2110 provides the voiceband data to the appropriate one of the DSP cores in DSP array 2112, which processes the TDM data a described herein. The output of the DSP core is provided to the ATM interface logic 2111 which assembles the data into AAL2 cells. The ATM interface logic 2111 maintains a DSP-to-VC/CID map in order to fill in the cell headers. The SBI multiplexer 2113 routes signaling information from the TSI cable 34 to the gateway controller 2022, which transmits any ABCD signaling bits from the common controller to the AAL2 cell assembly facility in the DSP unit 2110. The gateway controller 2022 is also responsible for programming the DSP-to-VC/CID map in the DSP unit 2110. AAL2 ATM cells carrying in-band data are multiplexed with those carrying out-of-band signaling and sent out the gateway ATM interface 2016.

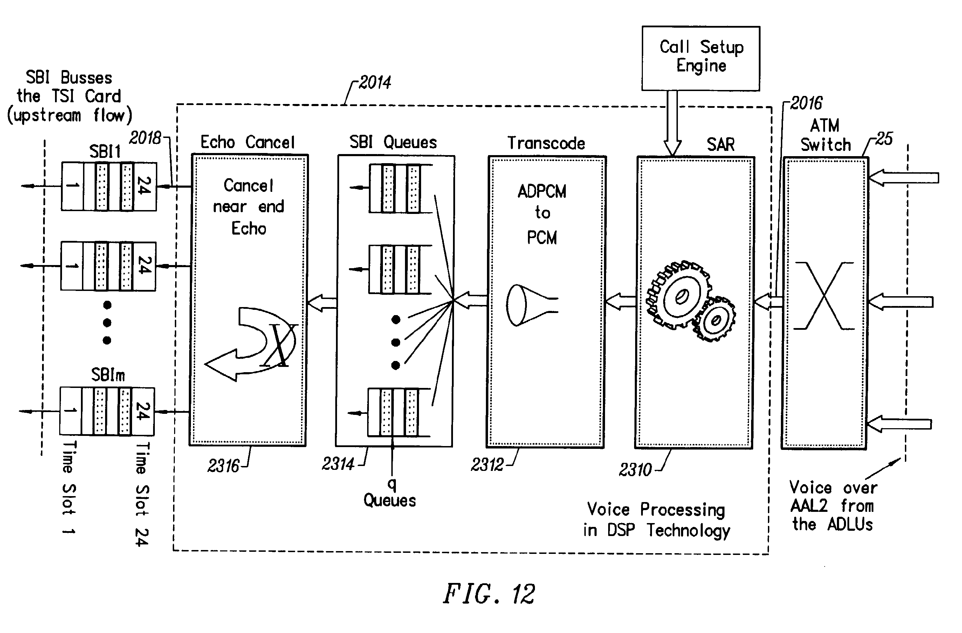

Fig. 12 symbolically illustrates certain functions of gateway 2014 for upstream Derived Line transmission. The voice-over-AAL2 cells from the ADLUs 24 (Fig. 2) are provided to the ATM switch fabric 25, which routes them to the ATM interface 2016 of the gateway 2014. The gateway 2014 performs AAL2 segmentation and reassembly (SAR) of the voiceband data. The output data is converted in transcoder 2310 from ADPCM to PCM (if not already in PCM format) and then provided to the appropriate one of q SBI queues 2314. The gateway 2014 then performs near end echo cancellation in echo canceler 2316, and provides the output to the TDM interface 2018 of the gateway 2014.

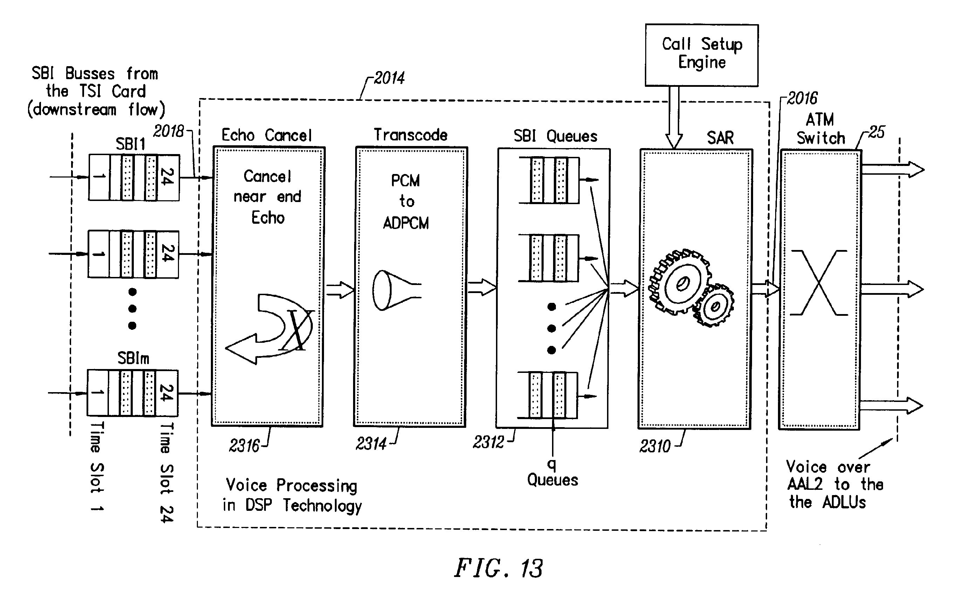

Fig. 13 illustrates the voice processing that takes place for derived line downstream transmissions in the gateway 2014. PCM data from the SBIs is provided to the gateway 2014 via the TDM interface 2018. In echo canceler 2316, near-end echo is canceled. The output is provided to transcoder 2314 which, optionally, translates the PCM data to ADPCM data. The data is then provided to the appropriate one of q SBI queues 2312 (one for each derived line supported by ABCU 22), and the outputs are provided to AAL2 segmentation and reassembly unit 2312. AAL2 SAR unit 2312 provides the ATM voice cells to the ATM switch 25 via the ATM interface 2016. The ATM switch 25 routes the voice-over-AAL2 cells to the appropriate ADLU 24 (Fig. 2).

Figs. 3, 4 and 11 illustrate symbolically an Access Management System (AMS) 98. The AMS 98 is a single element management system that manages the gateway and TDM and ATM routing functions of the combined DLC/DSLAM/gateway 114 for POTS, data and derived voice services. The AMS 98, among other things, is concerned with the information that is required to manage each network element in a Litespan system. This includes the information required to manage network element functions and the physical aspects of each network element in the Litespan system. AMS 98 also keeps track of information representing the access network, both physically and logically. In particular, it knows how each of the network element entities are related, topographically interconnected, and configured to provide and maintain end-to-end connectivity. For the purpose of managing connectivity, AMS 98 allows a user to provision PVCs and PVPs through the Litespan system, from an ATU-R all the way to the gateway on one of the ABCUs in the Litespan system. As previously mentioned, the gateway servicing a given derived line need not be in the CBA which contains the ADLU that connects physically to the customer premises. It can be on an ABCU in another CBA in the same Litespan terminal, or it can be on a CBA in the central office terminal. AMS 98 also performs numerous additional element management and network management functions not important to an understanding of the present invention.

As used herein, a given signal, event or value is "responsive" to a predecessor signal, event or value if the predecessor signal, event or value influenced the given signal, event or value. If there is an intervening processing element, step or time period, the given signal, event or value can still be "responsive" to the predecessor signal, event or value. If the intervening processing element or step combines more than one signal, event or value, the signal output of the processing element or step is considered "responsive" to *each* of the signal, event or value inputs. If the given signal, event or value is the same as the predecessor signal, event or value, this is merely a degenerate case in which the given signal, event or value is still considered to be "responsive" to the predecessor signal, event or value. "Dependency" of a given signal, event or value upon another signal, event or value is defined similarly.

The foregoing description of preferred embodiments of the present invention has been provided for the purposes of illustration and description. It is not intended to be exhaustive or to limit the invention to the precise forms disclosed. Many modifications and variations will be apparent to practitioners skilled in this art. In particular, for example, whereas the loop emulation services described herein are provided over an ATM interface, it will be appreciated that such services can alternatively or additionally be provided over other types of packet/cell transports as well, including but not limited to IP, IP-over-ATM, and Frame Relay (FR). In one embodiment, the integrated gateways described herein require only software/firmware reprogramming to alter their function from converting between TDM and ATM transports, to converting between TDM and a different packet/cell transport. In addition to these modifications, and without limitation, any and all variations described, suggested or incorporated by reference in the Background section of this patent application are specifically incorporated by reference into the description herein of embodiments of the invention. The embodiments described herein were chosen and described in order to best explain the principles of the invention and its practical application, thereby enabling others skilled in the art to understand the invention for various embodiments and with various modifications as are suited to the particular use contemplated. It is intended that the scope of the invention be defined by the following claims and their equivalents.

## Claims

1. A network node comprising:
a plurality of communications interfaces in said node including a packet-type interface and a TDM-type interface and a first additional interface which is a member of the group consisting of a packet-type interface and a TDM-type interface;
a first routing function in said node which routes traffic among interfaces in said plurality of communications interfaces which are of the type of said first additional interface; and
a gateway function in said node which transmits user traffic between an interworking one of said packet-type interfaces and an interworking one of said TDM-type interfaces, and further performs loop functions through said interworking TDM-type interface on behalf of a device coupled to said gateway function through said interworking packet-type interface.

2. A network node according to claim 1, wherein said packet-type interfaces comprise ATM-type interfaces.

3. A network node according to claim 1, wherein said packet-type interfaces comprise IP-type interfaces.

4. A network node according to claim 1, wherein said first routing function comprises a multiplexing-demultiplexing function but not a switching function.

5. A network node according to claim 1, wherein said plurality of communications interfaces includes a set of N1>0 network side interfaces of the type of said first additional interface and a set of N2>N1 subscriber side interfaces also of the type of said first additional interface,
and wherein said first routing function multiplexes user traffic between said network side interfaces and said subscriber side interfaces.

6. A network node according to claim 5, wherein said network node does not switch user traffic among said subscriber side interfaces.

7. A network node according to claim 5, wherein said first additional interface comprises a TDM-type interface.

8. A network node according to claim 1, wherein said first additional interface is a packet-type interface, and wherein said plurality of communications interfaces further includes a second additional interface which is a TDM-type interface,
further comprising a second routing function in said node which routes user traffic among interfaces in said plurality of communications interfaces which are of the type of said second additional interface.

9. A network node according to claim 1, wherein said gateway function comprises:
encapsulation means for encapsulating TDM-type user traffic arriving from said interworking TDM-type interface into packets for transmission toward said interworking packet-type interface; and
extraction means for extracting TDM-type user data from packets arriving from said interworking packet-type interface for transmission toward said interworking TDM-type interface.

10. A network node according to claim 1, for use with a remote packet-type termination unit reachable through said interworking packet-type interface, said packet-type termination unit having a POTS port,
wherein said gateway function comprises upstream signaling means for providing TDM signaling toward said interworking TDM-type interface on behalf of said POTS port.

11. A network node according to claim 1, wherein said gateway function comprises downstream signaling means for encoding TDM signaling into packets for transmission toward said interworking packet-type interface, in response to TDM signaling received from said TDM-type interface.

12. A network node according to claim 1, wherein said loop functions performed by said gateway through said interworking TDM-type interface on behalf of a device coupled to said gateway function through said interworking packet-type interface includes signaling an off-hook condition through said interworking TDM-type interface in response to receipt of a packet through said interworking packet-type interface containing a control code indicating an off-hook condition from the device.

13. A network node according to claim 1, wherein said loop functions performed by said gateway through said interworking TDM-type interface on behalf of a device coupled to said gateway function through said interworking packet-type interface includes signaling dialed digits through said interworking TDM-type interface in response to receipt of a packet through said interworking packet-type interface containing a control code indicating such digits dialed from the device.

14. A network node according to claim 1, wherein said interworking packet-type interface comprises an ATM-over-DSL-type interface.

15. A network node comprising:
a first plurality of packet-type communications interfaces including an interworking packet-type interface;
an interworking TDM-type interface;
a packet routing function in said node which routes packets among the interfaces in said first plurality of packet-type communications interfaces; and
a gateway function in said node which transmits user traffic between said interworking packet-type interface and said interworking TDM-type interface, and further performs loop functions through said interworking TDM-type interface on behalf of a device coupled to said gateway function through said interworking packet-type interface.

16. A network node according to claim 15, wherein said packet-type interfaces comprise ATM-type interfaces.

17. A network node according to claim 15, comprising a second plurality of TDM-type communications interfaces including said interworking TDM-type interface,
further comprising a second routing function in said node which routes TDM traffic among the interfaces in said second plurality of TDM-type communications interfaces.

18. A network node according to claim 17, wherein said second routing function comprises a multiplexing-demultiplexing function but not a switching function.

19. A network node according to claim 18, wherein said first routing function comprises a multiplexing-demultiplexing function but not a switching function.

20. A network node according to claim 15, wherein said gateway function comprises:
encapsulation means for encapsulating TDM-type user traffic arriving from said interworking TDM-type interface into packets for transmission toward said interworking packet-type interface; and
extraction means for extracting TDM-type user traffic from packets arriving from said interworking packet-type interface for transmission toward said interworking TDM-type interface.

21. A network node according to claim 20, wherein said gateway function comprises downstream signaling means for encoding TDM signaling into packets for transmission toward said interworking packet-type interface, in response to TDM signaling received from said TDM-type interface.

22. A network node according to claim 21, for use with a remote packet termination unit reachable through said interworking packet-type interface, said packet termination unit having a POTS port,
wherein said gateway function comprises upstream signaling means for providing TDM signaling toward said interworking TDM-type interface on behalf of said POTS port.

23. A network node according to claim 15, wherein said loop functions performed by said gateway through said interworking TDM-type interface on behalf of a device coupled to said gateway function through said interworking packet-type interface includes signaling an off-hook condition through said interworking TDM-type interface in response to receipt of a packet through said interworking packet-type interface containing a control code indicating an off-hook condition from the device.

24. A network node according to claim 15, wherein said interworking packet-type interface comprises an ATM-over-DSL-type interface.

25. A network node comprising:
a first plurality of TDM-type communications interfaces including an interworking TDM-type interface;
an interworking packet-type interface;
a TDM routing function in said node which routes traffic among the interfaces in said first plurality of TDM-type communications interfaces; and
a gateway function in said node which transmits user traffic between said interworking packet-type interface and said interworking TDM-type interface, and further performs loop functions through said interworking TDM-type interface on behalf of a device coupled to said gateway function through said interworking packet-type interface.

26. A network node according to claim 25, for use with a remote packet termination unit reachable through said interworking packet-type interface, said packet termination unit having a POTS port, and wherein said gateway function comprises:
downstream signaling means for encoding TDM signaling into packets for transmission toward said interworking packet-type interface, in response to TDM signaling received from said TDM-type interface; and
upstream signaling means for providing TDM signaling toward said interworking TDM-type interface on behalf of said POTS port.

27. A network node according to claim 25, wherein said loop functions performed by said gateway through said interworking TDM-type interface on behalf of a device coupled to said gateway function through said interworking packet-type interface includes signaling dialed digits through said interworking TDM-type interface in response to receipt of a packet through said interworking packet-type interface containing a control code indicating such digits dialed from the device.

28. A network node according to claim 25, wherein said interworking packet-type interface comprises an ATM-over-DSL-type interface.

29. An access network system comprising:
a plurality of ATM communications interfaces including subscriber side ATM-over-DSL interfaces and a network side ATM interface;
a network side TDM interface;
an ATM routing function which routes traffic among the interfaces in said plurality of ATM communications interfaces; and
a gateway function which transmits user traffic between said subscriber side ATM-over-DSL interfaces and said network-side TDM interface.

30. A system according to claim 29, comprising a plurality of TDM communications interfaces including said network side TDM interface and further including subscriber side TDM interfaces,
further comprising a TDM routing function which routes TDM traffic among the interfaces in said plurality of TDM communications interfaces.

31. A system according to claim 30, wherein said TDM routing function multiplexes and demultiplexes traffic between said network side TDM interface on one hand and said subscriber side TDM interfaces on the other hand.

32. A system according to claim 31, wherein said ATM routing function multiplexes and demultiplexes traffic between said network side ATM interface on one hand and said subscriber side ATM-over-DSL interfaces on the other hand.

33. A system according to claim 29, wherein said ATM routing function multiplexes and demultiplexes traffic between said network side ATM interface on one hand and said subscriber side ATM-over-DSL interfaces on the other hand.

34. A system according to claim 29, wherein said gateway function further performs loop functions through said network side TDM interface on behalf of a device coupled to said system through one of said subscriber side ATM-over-DSL interfaces.

35. A system according to claim 29, wherein said gateway function comprises:
encapsulation means for encapsulating downstream TDM user traffic arriving from said network side TDM interface into ATM cells and for transmitting said ATM cells toward one of said ATM-over-DSL subscriber side interfaces via said ATM routing function; and
extraction means for extracting TDM user traffic from ATM cells arriving from one of said subscriber side ATM-over-DSL interfaces via said ATM routing function and for transmitting said extracted TDM user traffic toward said network side TDM interface.

36. A system according to claim 35, comprising a plurality of TDM communications interfaces including said network side TDM interface and further including subscriber side TDM interfaces,
further comprising a TDM routing function which routes TDM traffic among the interfaces in said plurality of TDM communications interfaces,
and wherein said extraction means for extracting TDM user traffic and for transmitting said extracted TDM user traffic toward said network side TDM interface transmits said extracted TDM user traffic toward said network side TDM interface via said TDM routing function.

37. An access network system comprising:
a plurality of TDM communications interfaces including subscriber side TDM interfaces and a network side TDM interface;
a subscriber side ATM-over-DSL interface;
a TDM routing function which routes traffic among the interfaces in said plurality of TDM communications interfaces; and
a gateway function which transmits user traffic between said subscriber side ATM-over-DSL interface and said network-side TDM interface.

38. A system according to claim 37, wherein said TDM routing function multiplexes and demultiplexes traffic between said network side TDM interface on one hand and said subscriber side TDM interfaces on the other hand.

39. A system according to claim 37, wherein said gateway function further performs loop functions through said network side TDM interface on behalf of a device coupled to said system through said subscriber side ATM-over-DSL interface.

40. A system according to claim 37, wherein said gateway function comprises:
encapsulation means for encapsulating downstream TDM user traffic arriving from said network side TDM interface into ATM cells and for transmitting said ATM cells toward said ATM-over-DSL subscriber side interface; and
extraction means for extracting TDM user traffic from ATM cells arriving from said subscriber side ATM-over-DSL interface and for transmitting said extracted TDM user traffic toward said network side TDM interface.

41. A system according to claim 40, wherein said extraction means for extracting TDM user traffic and for transmitting said extracted TDM user traffic toward said network side TDM interface transmits said extracted TDM user traffic toward said network side TDM interface via said TDM routing function.
